# EUROPEAN PATENT APPLICATION

(11) **EP 1 153 945 A1**
(43) Date of publication of application: **14.11.2001**
(21) Application number: 01303963.1
(22) Date of filing: 30.04.2001
(51) Int. Cl.: C08F 12/08, C08F 4/64, C07F 17/00

(54) **Metallocene catalyst and preparing process of styrenic polymer using the same**

(30) Priority: 12.05.2000 KR 2000025401
(71) Applicant: SAMSUNG ELECTRONICS CO., LTD., Suwon-City, Kyungki-do 442-742 (KR)
(72) Inventor: Lyu, Yi Yeol, Yusung-Gu, Daejun-Shi 305-390 (KR)
(74) Representative: Kyle, Diana

(57) **Abstract**

Disclosed herein is a metallocene catalyst for use in the preparation of a styrenic polymer or copolymer. This metallocene catalyst contains a siloxy group introduced into an ancillary ligand bonded to a central metal of a transition metal compound. The introduction of the siloxy group is achieved by a reaction of the transition metal compound with a hydroxy functional group-containing silicone compound. The use of the metallocene catalyst of the present invention provides a styrenic polymer or copolymer having an excellent stereoregularity, a high melting point, and improved molecular weight and molecular weight distribution, even when it is used in combination with a small amount of a cocatalyst.

## Description

### BACKGROUND OF THE INVENTION

### Field of the Invention

The present invention relates to a novel metallocene catalyst and a process for the preparation of a styrenic polymer using the same. More particularly, the present invention relates to a new metallocene catalyst that provides a styrenic polymer having an excellent stereoregularity, a high melting point, and improved molecular weight and molecular weight distribution, even when it is used in combination with a small amount of a cocatalyst, and to a process for the preparation of the styrenic polymer using the metallocene catalyst.

### Description of the Prior Art

Generally, olefinic or styrenic polymers are prepared by radical polymerization, ionic polymerization or coordination polymerization using Ziegler-Natta catalysts. The radical or ionic polymerization produces polymers having an atactic structure, while the coordination polymerization using Ziegler-Natta catalysts provides polymers having mainly an isotactic structure. These polymers are classified into atactic, isotactic and syndiotactic polymers, depending on the steric configuration of benzene rings as side chains thereof The atactic structure means that the side chains are randomly arranged, and the isotactic structure means that the side chains are preponderantly arranged at one direction. The syndiotactic structure means that the side chains are regularly alternately arranged. Although the syndiotactic polymers were theoretically known with respect to their structure, their practical preparation was impossible before metallocene catalysts were applied.

The metallocene catalysts allowing the preparation of the stereoregular polymers have a structure in which a transition metal of a group IV of the Periodic Table is bonded to a ligand consisting of one or two cycloalkanedienyl groups or derivatives thereof. The transition metal of a group IV of the Periodic Table includes titanium, zirconium and hafnium, and the cycloalkanedienyl group includes cyclopentadienyl group, indenyl group, fluorenyl group and derivatives thereof

These metallocene catalysts are used along with cocatalysts. The conventionally used Zieglar-Natta catalysts consist of a halogenated titanium compound, a transition metal compound, as a main catalyst, and alkylaluminum as a cocatalyst. An example of the halogenated titanium compound includes titanium tetrachloride, and examples of the alkylaluminum include trialkylaluminum and triethylaluminum. Meanwhile, a recently developed metallocene catalyst was used together with alkylaluminoxane, as a cocatalyst, which was a product from a reaction of water with an alkylaluminum compound. This metallocene catalyst enabled the preparation of stereoregular polystyrenes (syndiotactic polystyrenes and isotactic polystyrenes) that could be not prepared formerly. In particular, the syndiotactic polystyrenes in which phenyl groups in a main chain thereof are positioned alternately have a crystalline structure unlike amorphous atactic polystyrenes that are commonly used in the prior art. These syndiotactic polystyrenes have been the subject of considerable interest because they had a melting point of about 270 °C and were excellent in their heat resistance and mechanical property.

European published Patent Application No. 210,615 (1987) discloses stereoregular syndiotactic polystyrenes, and also discloses cyclopentadienyl titaniumtrichloride and alkylsubstituted cyclopentadienyl titaniumtrichloride (i.e., pentamethylcyclopentadienyl titaniumtrichloride) as catalysts for use in the preparation of these polystyrenes. These catalysts were known to be excellent in their catalyst activity, and high in their molecular weight and syndiotactic index.

Japanese Patent Application Laid-Open No. Sho 63-191811 and Japanese Patent Application laid-open No. Heisei 3-250007 describe sulfur-bridged metallocene catalysts. These catalysts, however, suffer a drawback in that they are produced at a very low yield. Moreover, Japanese Patent Application Laid-Open Nos. Heisei 3-258812, 4-275313 and 5-105712 disclose alkyl-bridged metallocene catalysts. However, these catalysts are also disadvantageous in that they are produced at a low yield and thus difficult to be commercialized.

US Patent No. 4,544,762 discloses a process of preparing alpha-olefinic and styrenic polymers having a high stereoregularity using a catalyst system consisting of a transition metal catalyst (such as metallocene catalyst) in combination with a product from a reaction of alkylaluminum with a hydrated metal. The disclosed catalyst system exhibits a higher polymerization activity than Ziegler-Natta catalysts.

Japanese Patent Application Laid Open Nos. Sho 62-104828 and 62-187708 disclose metallocene catalysts for use in the preparation of styrenic polymers having a syndiotactic structure. The disclosed metallocene catalysts consist of a transition metal of a group IV of the Periodic Table as a central metal and a cyclopentadienyl-derivative group as a ligand, and are used in combination with alkylaluminoxane, a product from a reaction of alkylaluminum and a hydrated metal, as a cocatalyst.

Moreover, US Patent No. 5,026,798 discloses a process of preparing polymers of a high stereoregularity and molecular weight using a metallocene catalyst.

In addition, there was reported the use of a siloxane compound as a catalyst support (see J. Chem. Soc., Vol. 111, No. 5, 1989). The siloxane compound is described as being introduced into an ancillary ligand of a half-metallocene catalyst which ligand is bonded to a transition metal of a group IV of the Periodic Table. However, this catalyst containing the siloxane compound has a drawback in that it shows a very low polymerization activity when used for styrene polymerization and thus is difficult to be commercialized.

In the above literatures on the catalyst systems, there is no mention of compounds having a siloxy group introduced into an ancillary ligand of a half-metallocene catalyst which ligand is bonded to a transition metal of a group IV ofthe Periodic Table, and also no mention of properties of the siloxy-containing compounds.

As a result of a study to prepare styrenic polymers having an excellent stereoregularity, a high melting point and improved molecular weight and molecular weight distribution, we have found a new metallocene catalyst containing a siloxy group introduced into an ancillary ligand bonded to a central metal of a half-metallocene compound.

### SUMMARY OF THE INVENTION

It is therefore an object of the present invention to provide a new, highly active metallocene catalyst which can produce a styrenic polymer having an excellent stereoregularity, a high melting point and improved molecular weight and molecular weight distribution at high production even when being used in combination with a small amount of a cocatalyst.

It is other object of the present invention to provide a process of preparing a styrenic polymer of an excellent stereoregularity using the new metallocene catalyst as above described.

### DETAILED DESCRIPTION OF THE PREFERRED EMBODIMENTS

The foregoing and other objects, features and advantages of the invention will be apparent to those skilled in the art to which the present invention relates from reading the following specification.

A new metallocene catalyst according to the present invention is prepared by reacting a transition metal compound represented by the following formula (G) with a hydroxy group-containing silicone compound represented by the following formula (H) to introduce a siloxy group into an ancillary ligand of the transition metal compound:

CpMR¹R⁴R⁵ (G)

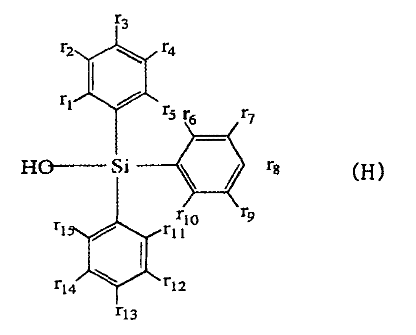

wherein
M is titanium, zirconium or hafnium each being a transition metal of a group IV of the Periodic Table;
Cp is selected from a cyclopentadienyl group, an indenyl group, a fluorenyl group and a derivative thereof each forming an η⁵ bond with the transition metal M;
R¹, R⁴ and R⁵ are each independently a hydrogen atom, a halogen atom, an alkyl group having 1 to 20 carbon atoms, a cycloalkyl group having 1 to 20 carbon atoms, an alkoxy group having 1 to 20 carbon atoms, an acyloxy group having 1 to 20 carbon atoms, an aryl group having 6 to 20 carbon atoms, an alkylaryl group having 6 to 20 carbon atoms or an arylalkyl group having 6 to 20 carbon atoms; and
r1, r2, r3, r4, r5, r6, r7, r8, r9, r10, r11, r12, r13, r14 and r15 in the formula (H) are each independently a hydrogen atom, an alkyl group having 1 to 10 carbon atoms, a cycloalkyl group having 1 to 10 carbon atoms, an alkoxy group having 1 to 10 carbon atoms, an aryl group having 6 to 20 carbon atoms, an alkylaryl group having 6 to 20 carbon atoms or an arylalkyl group having 6 to 20 carbon atoms.

The metallocene catalyst of the present invention is a product from a reaction of the transition metal compound represented by the formula (G) with the hydroxy group-containing silicone compound, and can be present in various forms depending on its nature. This metallocene catalyst is represented by the following formula (A) or (B):

CpMR¹R²R³ (A)

CpMR¹R⁴R² (B)

wherein
M is titanium, zirconium or hafnium each being a transition metal of a group IV of the Periodic Table;
R¹ and R⁴ are each independently a hydrogen atom, a halogen atom, an alkyl group having 1 to 20 carbon atoms, a cycloalkyl group having 1 to 20 carbon atoms, an alkoxy group having 1 to 20 carbon atoms, an acyloxy group having 1 to 20 carbon atoms, an aryl group having 6 to 20 carbon atoms, an alkylaryl group having 6 to 20 carbon atoms, an arylalkyl group having 6 to 20 carbon atoms or an alkylthio group;
R² and R³ are each independently a siloxy group represented by the following formula (C): 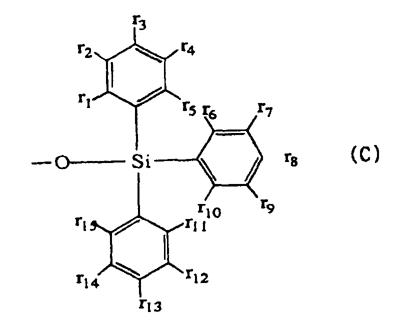
wherein r1, r2, r3, r4, r5, r6, r7, r8, r9, r10, r11, r12, r13, r14 and r15 are each independently a hydrogen atom, an alkyl group having 1 to 10 carbon atoms, a cycloalkyl group having 1 to 10 carbon atoms, an alkoxy group having 1 to 10 carbon atoms, an aryl group having 6 to 20 carbon atoms, an alkylaryl group having 6 to 20 carbon atoms or an arylalkyl group having 6 to 20 carbon atoms; and
Cp is selected from a cyclopentadienyl group, an indenyl group, a fluorenyl group and a derivative thereof each forming an η⁵ bond with the transition metal M.

For polymerization of styrenic monomers, the metallocene catalyst of the present invention is used in combination with a cocatalyst which is previously known in the art. For the cocatalyst, there is used an organometallic compound or a mixture of a non-coordinated Lewis acid and alkylaluminum. The organometallic compound includes alkylaluminoxane, an organoaluminum compound and a mixture thereof. Representative alkylaluminoxane includes methylaluminoxane (MAO) and modified methylaluminoxane (MMAO). The organoaluminum compound has units represented by the following formula (D), and includes a chain aluminoxane represented by the following formula (E) and a cyclic aluminoxane represented by the following formula (F): 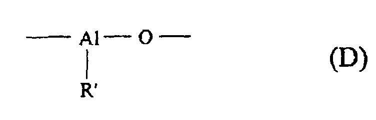 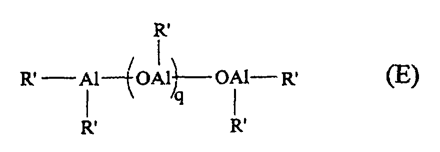 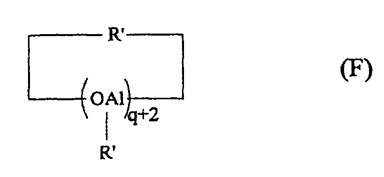 wherein R' is an alkyl group having 1 to 6 carbon atoms, and q is an integer of 0 to 100.

As to the usage ratio of the metallocene catalyst according to the present invention to the organometallic compound, the molar ratio of aluminum in the organometallic compound to the transition metal in the metallocene catalyst (e.g., titanium, zirconium and hafnium) is generally in the range of 1 : 1 to 1 x 10⁵, and preferably in the range of 10 : 1 to 1 x 10³.

In the mixture of the non-coordinated Lewis acid and alkylaluminum used as the cocatalyst, the non-coordinated Lewis acid in the mixture of the non-coordinated Lewis acid and alkylaluminum used as the cocatalyst includes N,N-dimethylaniline tetrakis(pentafluorophenyl)borate, triphenylcarbenium tetrakis(pentafluorophenyl)borate, ferrocerium tetrakis(pentafluorophenyl)borate, tris(pentafluorophenyl)borate and the like. The alkylaluminum includes trimethylaluminum, triisobutylaluminum, tri(n-butyl)aluminum, tri(n-propyl)aluminum, triisopropylaluminum and the like.

In the catalyst system consisting of the new metallocene catalyst of the present invention and the cocatalyst, the molar ratio of the non-coordinated Lewis acid to the transition metal in the metallocene catalyst is preferably in the range of 0.1 : 1 to 20 : 1. The molar ratio of the alkylaluminum to the transition metal in the metallocene catalyst is preferably in the range of 1 : 1 to 3,000 : 1, and more preferably in the range of 50 : 1 to 1,000 : 1.

The catalyst system consisting of the new metallocene catalyst of the present invention and the cocatalyst is used for polymerization of styrenic monomers. The styrenic monomers that are polymerized in the presence of the catalyst system containing the metallocene catalyst of the present invention include styrenes and styrene derivatives. These monomers are homopolymerized, although they may also be copolymerized.

The styrenes and styrene derivatives that are polymerized using the catalyst system of the present invention can be represented by the following formula (i) or (j): 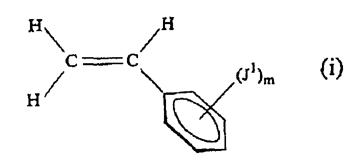 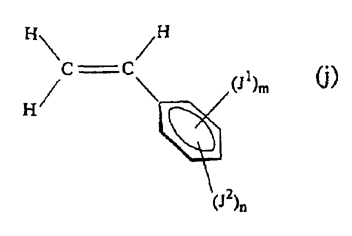 wherein
J¹ represents a hydrogen atom, a halogen atom, or a group containing at least one of carbon, oxygen, silicon, phosphorus, sulfur, cerium and tin atoms;
m is an integer of 1 to 3, and when m is 2 or 3, each J¹ can be different;
J² is a group containing at least one unsaturated bond and having 2 to 10 carbon atoms; and
n is 1 or 2, and when n is 2, each J² can be different.

The following examples are for further illustration purposes only and in no way limit the scope of this invention.

### Example 1: Synthesis of Catalyst-1

[(CH₃)₅CpTi(OCH₃)₂ [OSi(C₆H₅)₃]]

10 mmol (2.764 g) of triphenylsilanol was introduced into a flask and diluted with 100 ml of benzene. To which, a solution of 10 mmol (2.762 g) of pentamethylcyclopentadienyltitanium trimethoxide diluted with 100 ml of benzene in another flask was slowly added at room temperature. At the complete end of the addition, the mixture was heated to 50 °C and allowed to react for 18 hours at this temperature. After methanol produced from a reaction with benzene was removed under vacuum, the resulting material was added with 200 ml of pentane at -78 °C and stirred for 30 minutes. Then, a solid component in the stirred solution was isolated from a liquid component using a cannula and dried under vacuum at about 50 °C for 5 hours, thereby obtaining the desired catalyst in which one of three ancillary ligands was substituted with a siloxy group and the remaining two ancillary ligands were substituted with a methoxy group. Yield of the product was 95%.

### Example 2: Synthesis of Catalyst-2

[(CH₃)₅CpTi(OCH₃)[OSi(C₆H₅)₃]₂]

20 mmol (5.528 g) of triphenylsilanol was introduced into a flask and diluted with 100 ml of benzene. To which, a solution of 10 mmol (2.762 g) of pentamethylcyclopentadienyltitanium trimethoxide diluted with 100 ml of benzene in another flask was slowly added at room temperature. At the complete end of the addition, the mixture was heated to 50 °C and allowed to react for 18 hours at this temperature. After methanol produced from a reaction with benzene was removed under vacuum, the resulting material was added with 200 ml of pentane at 0 °C and stirred for 30 minutes. Then, a solid component in the stirred solution was isolated from a liquid component using a cannula and washed with 50 ml of pentane three times. The washed solid was dried under vacuum at about 50 °C for 5 hours, thereby obtaining the desired catalyst in which two of three ancillary ligands were substituted with a siloxy group and the remaining one ancillary ligand was substituted with a methoxy group. Yield of the product was 93%.

### Example 3: Synthesis of Catalyst-3

[(CH₃)₅CpTi(Cl)₂[OSi(C₆H₅)₃]]

10 mmol (2.764 g) of triphenylsilanol was introduced into a flask, diluted with 100 ml of benzene and added with 11 mmol (1.113 g) of triethylamine. To which, a solution of 10 mmol (2.894 g) of pentamethylcyclopentadienyltitanium trichloride diluted with 100 ml of benzene in another flask was slowly added at 0 °C. At the complete end of the addition, the mixture was slowly heated to 50 °C and allowed to react for 18 hours at this temperature. After removing a compound of (CH₃CH₂)₃NHCl through a filter, the remaining solution was collected. Then, triethylamine present after a reaction with benzene was removed under vacuum, and the resulting material was added with 200 ml of pentane at 0 °C and stirred for 30 minutes. Then, a solid component in the stirred solution was isolated from a liquid component using a cannula and washed with 50 ml of pentane three times. The washed solid was dried under vacuum at about 50 °C for 5 hours, thereby obtaining the desired catalyst in which one of three ancillary ligands was substituted with a siloxy group and the remaining two ancillary ligands were substituted with a chloride group. Yield of the product was 92%.

### Example 4: Synthesis of Catalyst-4

[(CH₃)₅CpTi(Cl)[OSi(C₆H₅)₃]₂]

20 mmol (5.528 g) of triphenylsilanol was introduced into a flask, diluted with 100 ml of benzene and added with 22 mmol (2.226 g) of triethylamine. To which, a solution of 10 mmol (2.894 g) of pentamethylcyclopentadienyltitanium trichloride diluted with 100 ml of benzene in another flask was slowly added at 0 °C. At the complete end of the addition, the mixture was slowly heated to 50 °C and allowed to react for 18 hours at this temperature. After removing a compound of (CH₃CH₂)₃NHCl through a filter, the remaining solution was collected. Then, triethylamine present after a reaction with benzene was removed under vacuum, and the resulting material was added with 200 ml of pentane at 0 °C and stirred for 30 minutes. Then, a solid component in the stirred solution was isolated from a liquid component using a cannula and washed with 50 ml of pentane three times. The washed solid was dried under vacuum at about 50 °C for 5 hours, thereby obtaining the desired catalyst in which two of three ancillary ligands were substituted with a siloxy group and the remaining one ancillary ligand was substituted with a chloride group. Yield of the product was 90%.

### Example 5: Synthesis of Catalyst-5

[(CH₃)₅CpTi(OCH₃)₂[OSi(CH₂CH₃)₃]].

10 mmol (1.322 g) of triethylsilanol was introduced into a flask and diluted with 100 ml of benzene. To which, a solution of 10 mmol (2.762 g) of pentamethylcyclopentadienyltitanium trimethoxide diluted with 100 ml of benzene in another flask was slowly added at room temperature. At the complete end of the addition, the mixture was heated to 50 °C and allowed to react for 18 hours at this temperature. Then, methanol produced from a reaction with benzene was removed under vacuum. The resulting material was dried under vacuum at about 50 °C for 5 hours, thereby obtaining the desired catalyst in which one of three ancillary ligands was substituted with a siloxy group and the remaining two ancillary ligands were substituted with a methoxy group. Yield of the product was 89%.

### Example 6: Synthesis of Catalyst-6

[(CH₃)₅CpTi(OCH₃)[OSi(CH₂CH₃)₃]₂]

20 mmol (2.645 g) of triethylsilanol was introduced into a flask and diluted with 100 ml of benzene. To which, a solution of 10 mmol (2.762 g) of pentamethylcyclopentadienyltitanium trimethoxide diluted with 100 ml of benzene in another flask was slowly added at room temperature. At the complete end of the addition, the solution was heated to 50 °C and allowed to react for 18 hours at this temperature. Then, methanol produced from a reaction with benzene was removed under vacuum. The resulting material was dried under vacuum at about 50 °C for 5 hours, thereby obtaining the desired catalyst in which two of three ancillary ligands were substituted with a siloxy group and the remaining one ancillary ligand was substituted with a methoxy group. Yield of the product was 85%.

### Example 7: Synthesis of Catalyst-7

[(CH₃)₅CpTi(O₃)[Si₇O₉(CH₂CH₂CH₂CH₂CH)₇]]

10 mmol (8.755 g) of 1,3,5,7,9,11,14-heptacyclopentyltricyclo[7,3,3,15,11]heptasiloxane-endo-3,7,14-triol was introduced into a flask, diluted with 200 ml of benzene and added with 33 mmol (3.339 g) of triethylamine. To which, a solution of 10 mmol (2.894 g) of pentamethylcyclopentadienyltitanium trichloride diluted with 100 ml of benzene in another flask was slowly added at 0 °C. At the complete end of the addition, the solution was slowly heated and allowed to react for 18 hours at this temperature. After removing a compound of (CH₃CH₂)₃NHCl through a filter, the remaining solution was collected. Then, triethylamine present after a reaction with benzene was removed under vacuum, and the resulting material was added with 200 ml of pentane at 0 °C and stirred for 30 minutes. Then, a solid component in the stirred solution was isolated from a liquid component using a cannula and washed with 50 ml of pentane three times. The washed solid was dried under vacuum at about 50 °C for 5 hours, thereby obtaining the desired catalyst in which three ancillary ligands were substituted with a siloxy group. Yield of the product was 85%.

### Examples 8-12: Styrene Polymerization (Solution Polymerization)

In each of Examples 8-12, styrene polymerization was carried out in a glass reactor equipped with a temperature indicator, a mechanical stirrer and valves for the supplying of monomers and nitrogen. For this styrene polymerization, each of new metallocene catalysts prepared in Examples 1, 2, 5, 6 and 7 was used.

In the respective Examples, the temperature within the reactor was set at 70 °C, and 5 ml of styrene monomers, 80 ml of toluene, modified methylaluminoxanetitanium containing 0.001 mol of aluminum as a cocatalyst, and a metallocene catalyst containing 2.00 x 10⁻⁶ mol of titanium were introduced into the reactor. Polymerization was carried out for 30 minutes, and 100 ml of methanol was then supplied to stop the reaction. The obtained product was added with an amount of methanol to which hydrochloric acid had been added. Then, the mixture was filtered to give a styrene polymer. The polymer was washed with methanol, filtered, and dried under vacuum. Table 1 below indicates properties of styrene polymers obtained by the polymerization in the respective Examples 8-12.

### Comparative Example 1

Styrene polymerization was carried out in such a manner as described in Example 8 except that pentamethylcyclopentadienyltitanium trimethoxide (comparative catalyst-1), a conventional metallocene catalyst, was used as a metallocene catalyst. Properties of the obtained styrene polymer are shown in Table 1.

**Table 1**

| Examples | Catalysts | Yield (g) | Activity KgPS/[Ti]hr | Stereoregularity (%) | Molecular weight | Molecular weight distribution | Melting point (°C) |
|---|---|---|---|---|---|---|---|
| 8 | 1 | 2.01 | 2010 | 99 | 328,700 | 3.03 | 271 |
| 9 | 2 | 3.10 | 3100 | 99 | 324,000 | 2.71 | 271 |
| 10 | 5 | 0.40 | 400 | 98 | 180,000 | 2.14 | 268 |
| 11 | 6 | 0.15 | 150 | 97 | 175,000 | 2.32 | 268 |
| 12 | 7 | 0.31 | 310 | 98 | 350,000 | 2.04 | 271 |
| Com. Ex. 2 | Com. Cat. 2 | 1.66 | 1660 | 99 | 330,000 | 2.13 | 271 |

### Examples 13-14: Styrene Polymerization (Solution Polymerization)

In each of Examples 13-14, styrene polymerization was carried out in a glass reactor equipped with a temperature indicator, a mechanical stirrer and valves for the supplying of monomers and nitrogen. For this styrene polymerization, each of new metallocene catalysts prepared in Examples 3 and 4 was used.

In the respective Examples, the temperature within the reactor was set at 70 °C, and 5 ml of styrene monomers, 80 ml of toluene, modified methylaluminoxanetitanium containing 0.001 mol of aluminum as a cocatalyst, and a metallocene catalyst containing 8.00 x 10⁻⁶ mol of titanium were introduced into the reactor. Polymerization was carried out for 30 minutes, and 100 ml of methanol was then supplied to stop the reaction. The obtained product was added with an amount of methanol to which hydrochloric acid had been added. Then, the mixture was filtered to give a styrene polymer. The polymer was washed with methanol, filtered, and dried under vacuum. Table 2 below indicates properties of styrene polymers obtained by the polymerization in the respective Examples 13-14.

### Comparative Example 2

Styrene polymerization was carried out in such a manner as described in Example 9 except that pentamethylcyclopentadienyltitanium trichloride (comparative catalyst-2), a conventional metallocene catalyst, was used as a metallocene catalyst. Properties ofthe obtained styrene polymer are shown in Table 2.

**Table 2**

| Examples | Catalysts | Yield (g) | Activity KgPS/[Ti]hr | Stereoregul Arity (%) | M.W. | M.W. distribution | Melting point (°C) |
|---|---|---|---|---|---|---|---|
| 13 | 3 | 2.32 | 580 | 99 | 260,000 | 2.03 | 271 |
| 14 | 4 | 3.97 | 993 | 99 | 270,000 | 2.01 | 272 |
| Com. Ex. 2 | Com.Cat.2 | 2.13 | 533 | 99 | 253,000 | 1.92 | 271 |

### Examples 15-16: Copolymerization of Styrene and Tert-butylstyrene (Solution Polymerization)

In each of Examples 15-16, copolymerization of styrene and tert-butylstyrene was carried out in a glass reactor equipped with a temperature indicator, a mechanical stirrer and valves for the supplying of monomers and nitrogen. For this copolymerization, each of new metallocene catalysts prepared in Examples 1 and 2 was used.

In the respective Examples, the temperature within the reactor was set at 70 °C, and 4.5 ml of styrene monomers, 0.2 ml of tert-butylstyrene, 80 ml of toluene, modified methylaluminoxanetitanium containing 0.0025 mol of aluminum as a cocatalyst, and a metallocene catalyst containing 5.00 x 10⁻⁶ mol of titanium were introduced into the reactor. Polymerization was carried out for 30 minutes and 100 ml of methanol was then supplied to stop the reaction. The obtained product was added with an amount of methanol to which hydrochloric acid had been added. Then, the mixture was filtered to give a styrene polymer. The polymer was washed with methanol, filtered, and dried under vacuum. Table 3 below indicates properties of styrene polymers obtained by the polymerization in the respective Examples 15-16.

### Comparative Example 3

Styrene polymerization was carried out in such a manner as in Example 10 except that pentamethylcyclopentadienyltitanium trimethoxide (comparative catalyst-1), a conventional metallocene catalyst, was used as a catalyst. Properties of the obtained styrene polymer are shown in Table 3.

**Table 3**

| Examples | Catalysts | Yield (g) | Activity KgPS/[Ti]hr | Stereoregul arity (%) | M.W. | M.W. Distribution | Melting point (°C) |
|---|---|---|---|---|---|---|---|
| 15 | 1 | 3.42 | 1368 | 98 | 485,000 | 2.15 | 253 |
| 16 | 2 | 4.21 | 1684 | 98 | 475,000 | 2.65 | 253 |
| Com. Ex. 3 | Com. Cat.1 | 3.41 | 1364 | 98 | 480,300 | 2.17 | 252 |

### Examples 17-18: Terpolymerization of Styrene, Tert-butylstyrene and Block Macromonomer of Isoprene and Styrene (Solution Polymerization)

In each of Examples 17-18, terpolymerization of styrene, tert-butylstyrene and block macromonomer of isoprene and styrene was carried out in a glass reactor equipped with a temperature indicator, a mechanical stirrer and valves for the supplying of monomers and nitrogen. For this terpolymerization, each of new metallocene catalysts prepared in Examples 1 and 2 was used.

In the respective Examples, the temperature within the reactor was set at 70 °C, and 4.5 ml of styrene monomer, 0.2 ml of tert-butylstyrene, 0.075 g of block macromonomer of isoprene and styrene, 80 ml of toluene, modified methylaluminoxanetitanium containing 0.0025 mol of aluminum as a cocatalyst, and a metallocene catalyst containing 5.00 x 10⁻⁶ mol of titanium were introduced into the reactor. Polymerization was then carried out for 30 minutes, and 100 ml of methanol was then supplied to stop the reaction. The obtained product was added with an amount of methanol to which hydrochloric acid had been added. Then, the mixture was filtered to give a styrene polymer. The polymer was washed with methanol, filtered, and dried under vacuum. Table 4 below indicates properties of styrene polymers obtained by the polymerization in the respective Examples 17-18.

### Comparative Example 4

Styrene polymerization was carried out in such a manner as described in Example 11 except that pentamethylcyclopentadienyltitanium trimethoxide (comparative catalyst-1), a conventional metallocene catalyst, was used as a metallocene catalyst. Properties of the obtained styrene polymer are shown in Table 4.

**Table 4**

| Examples | Catalysts | Yield (g) | Activity KgPS/[Ti]hr | Stereoregul Arity (%) | M.W. | M.W. distribution | Melting point (°C) |
|---|---|---|---|---|---|---|---|
| 17 | 1 | 2.01 | 804 | 98 | 525,000 | 2.10 | 250 |
| 18 | 2 | 3.86 | 1544 | 98 | 576,000 | 2.21 | 250 |
| Com. Ex. 4 | Com. Cat.1 | 1.63 | 652 | 98 | 622,000 | 1.98 | 251 |

In the above Tables 1 to 4, the stereoregularity of the obtained polymers (a syndiotactic index of polystyrene) was indicated in percentage of a weight of polymer remaining after the extraction by methyl ethyl ketone relative to a weight of polymer before the extraction. Melting point of the polymers was measured by means of Differential Scanning Calorimetry (DSC). In this measurement, the sample from the polymers was heated to a temperature of 300 °C at a scanning rate of 10 °C/minute, maintained at this temperature for 5 minutes, cooled, and then heated at a scanning rate of 10 °C/minute. In addition, the molecular weight and the molecular weight distribution were measured by means of Gel Permeation Chromatograms (GPC).

As apparent from the foregoing, the present invention provides new metallocene catalysts that allow the preparation of styrenic polymers having an excellent stereoregularity, a high melting point, and improved molecular weight and molecular weight distribution, even when being used in combination with a small amount of cocatalysts. In addition, the metallocene catalysts of the present invention has an excellent polymerization activity as compared to the conventional metallocene catalyst.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A metallocene catalyst for styrene polymerization, which is represented by the following formula (A) or (B), and contains a siloxy group introduced into an ancillary ligand bonded to a central metal of a transition metal compound constituting the metallocene catalyst:
CpMR¹R²R³ (A)
CpMR¹R⁴R² (B)
wherein
M is titanium, zirconium or hafnium each being a transition metal of a group IV of the Periodic Table;
R¹ and R⁴ are each independently a hydrogen atom, a halogen atom, an alkyl group having 1 to 20 carbon atoms, a cycloalkyl group having 1 to 20 carbon atoms, an alkoxy group having 1 to 20 carbon atoms, an acyloxy group having 1 to 20 carbon atoms, an aryl group having 6 to 20 carbon atoms, an alkylaryl group having 6 to 20 carbon atoms, an arylalkyl group having 6 to 20 carbon atoms or an alkylthio group;
R² and R³ are each independently a siloxy group represented by the following formula (C): 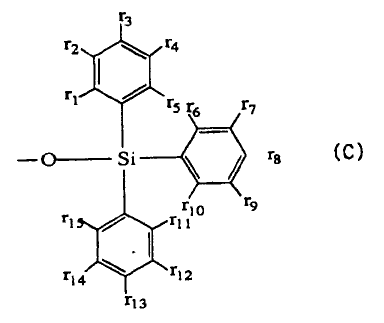
wherein r1, r2, r3, r4, r5, r6, r7, r8, r9, r10, r11, r12, r13, r14 and r15 are each independently a hydrogen atom, an alkyl group having 1 to 10 carbon atoms, a cycloalkyl group having 1 to 10 carbon atoms, an alkoxy group having 1 to 10 carbon atoms, an aryl group having 6 to 20 carbon atoms, an alkylaryl group having 6 to 20 carbon atoms or an arylalkyl group having 6 to 20 carbon atoms; and
Cp is selected from a cyclopentadienyl group, an indenyl group, a fluorenyl group and a derivative thereof each forming an η⁵ bond with the transition metal M.

2. A process for the preparation of a styrene polymer or copolymer which comprises polymerizing a styrene monomer or monomer as a styrene derivative or copolymerizing the styrene monomer and a monomer as the styrene derivative, using the metallocene catalyst of Claim 1 as a main catalyst and a mixture of an organometallic compound or non-coordinated Lewis acid with an alkylaluminum as a cocatalyst.

3. The process of Claim 2, in which the molar ratio of aluminum in the organometallic compound to the transition metal in the metallocene catalyst is in the range of 1 : 1 to 1x10⁵ : 1.

4. The process of Claim 2, in which the molar ratio of the non-coordinated Lewis acid to the transition metal in the metallocene catalyst is in the range of 0.1 : 1 to 20 : 1, and the molar ratio of the alkylaluminum to the transition metal in the metallocene catalyst is in the range of 1 : 1 to 3000 : 1.

5. The process of Claim 2, in which the styrenic monomer and the styrenic derivative monomer is represented by the following formula (i) or (j): 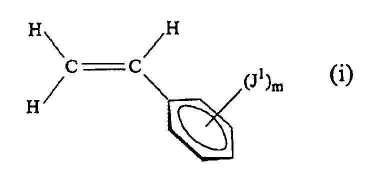 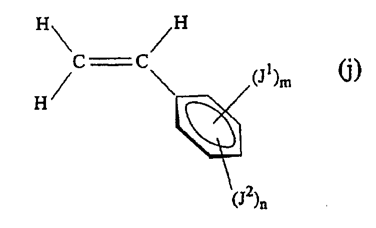 wherein
J¹ represents a hydrogen atom, a halogen atom, or a group containing at least one of carbon, oxygen, silicon, phosphorus, sulfur, cerium and tin atoms;
m is an integer of 1 to 3, and when m is 2 or 3, each J¹ can be different;
J² is a group containing at least one unsaturated bond and having 2 to 10 carbon atoms; and
n is 1 or 2, and when n is 2, each J² can be different.
